# EUROPEAN PATENT APPLICATION

(11) **EP 1 093 089 A2**
(43) Date of publication of application: **18.04.2001**
(21) Application number: 00120247.2
(22) Date of filing: 27.09.2000
(51) Int. Cl.: G06T 15/00

(54) **System and method for quasi three-dimensional multimedia image processing from two-dimensional image data**

(30) Priority: 11.10.1999 KR 4391999
(71) Applicant: Inmax T&C Co., Ltd., Ro 5 Ga, Joong-Gu, Seoul (KR)
(72) Inventor: Sung-Woo, Kim, 17th Floor, Daewoo Center Building, Seoul 100-714 (KR)
(74) Representative: Wilhelm & Dauster Patentanwälte European Patent Attorneys

(57) **Abstract**

The present invention discloses a multimedia image processing system and method for providing an information about an article either on Internet or in the electronic catalogue distributed in a recording means.

The multimedia image processing system and method in accordance with the present invention discloses a scheme to provide quasi three-dimensional image of an article corresponding to a specific viewpoint from a set of two-dimensional image data. The present invention makes it possible for the Internet shopper to enjoy the 360-degree look of an object under the viewer's control with optional sound and/or text data in a rotational manner.

## Description

### TECHNICAL FIELD

The present invention relates to a data processing system, method, and its application to a computer program for presenting an information of an article or a sales product to a customer either on Internet or on an electronic medium such as a diskette or a CDROM.

More particularly, the present invention provides a system and method of processing image data in a quasi-three-dimensional way from a prepared set of two-dimensional images or of pictures, which allows the user to manipulate the view point of the object in accordance with the viewer's intention.

Additionally, the present invention provides a multimedia data processing method and system thereof such as sound data and text data for providing extra information about an article on the electronic catalogue.

### BACKGROUND ART

Recently, continuous effort has been made to develop an efficient method of presenting information of an article to a customer through electronic catalogue or Internet.

A traditional software technology for introducing an information of an article to a customer is that either a two-dimensional image or a series of two-dimensional images of an article is presented on the internet web page or in the windows environment that is controlled by an operating computer program.

In this case, the sound and text data explaining the features of an article can also be provided to a customer either on the network or on the electronic catalogue in the storage means.

However, the above-mentioned traditional method has a shortcoming in a sense that it does not provide sufficient information about an article and fails to provide information about a three-dimensional shape of a specific article.

As an improved approach for presenting an article information in an electric catalogue, a software technology presenting a sequential set of moving pictures simultaneously with sound and text has been proposed.

Despite the advantage of providing a sufficient amount of an article information due to the multimedia nature of the three-dimensional moving pictures with sound and text, the above-mentioned conventional approach still has a technical problem because of an enormous data loading time due to a huge computer file.

Furthermore, since the moving picture is generally presented in a time sequential manner, it is difficult for the viewer to take a look at an article from the viewer's desired view angle during the presentation.

In the meanwhile, quasi three-dimensional image processing approaches, which allow the viewer to manipulate the viewpoint of an article under the viewer's control with a set of two-dimensional image data, have been proposed.

One approach among the quasi three-dimensional image processing techniques is based upon a method comprising the following steps. Namely, computer software for the control of image processing is programmed like plug-in software on Internet and is downloaded to the computer of an Internet user.

Thereafter, the downloaded computer program is executed for the presentation of the information of a specific article such as the three-dimensional shape, features, and prices etc. on the computer of an Internet shopper or a shopper browsing the electronic catalogue. In this case, the image data of a specific article or a sales product is downloaded later when it is needed during the execution of the computer program.

Further, the traditional system software for the presentation of an article information provides an input device such as an icon enabling the viewer to select the direction of the view point simply by clicking the icon, for instance.

However, the above-mentioned traditional method still has a shortcoming in a sense that it does not include multimedia means such as sound and text as well as image data.

Another traditional system software for providing an article information employs a method of downloading a computer program packaged with a data file comprising image data, for instance, to the computer of an Internet user all at once.

In this case, the viewer or the shopper, whatever we may call, can enjoy peering the shape of an article on the shelf by rotating the object through a wide rage of view angles simply by placing the mouse pointer on the image and dragging it.

Even in this case, the method has a drawback in a sense that it lacks in multimedia features such as sound data processing and/or text data processing.

In the meanwhile, the general three-dimensional image processing technology, which relies on the modeling scheme or the rendering technique with three-dimensional coordinate information of a specific article, has been disclosed.

This software system also enables the viewer to rotate the object displayed on the monitor under the control of the viewer's intention. The above-mentioned technique, however, still has a limitation in a sense that the amount of the processing data is so enormous that a lot of programming time with accompanying expense is needed.

### DISCLOSURE OF INVENTION

In view of these problems, there is a need in the art for a data processing, especially for the presentation of article information in an electronic catalogue, which is not subjected to these limitations.

Accordingly, it is an object of the present invention to provide a system and method of providing information about an article with a multimedia means including image, sound, and text.

It is further an object of the present invention to provide a system and method of providing information about an article with maximum amount of information delivered with minimum file size of computer software.

Yet it is another object of the present invention to provide a quasi-three-dimensional image processing method enabling the viewer to take a look at the shape of an article from any viewpoint under his control from the prepared two-dimensional image data.

In accordance with a broad aspect of the present invention, provided are a system, method, and computer program for quasi three-dimensional image processing, which present an information comprising image, sound, and text to an Internet shopper.

The quasi three-dimensional image system employed in the present invention is different from the conventional method employing the moving pictures displayed in a time-sequential manner.

In addition, the quasi three-dimensional image system employed in the present invention differs from the conventional modeling or the rendering scheme that depends upon the extracted x-, y-, z- coordinates of the image.

The information providing system for an electric catalogue in accordance with the present invention provides an image processing software module 8 that enables the viewer to rotate or to manipulate the direction of the view point from the prepared set of two-dimensional image data.

As a preferred embodiment of the two-dimensional image data in accordance with the present invention, a set of pictures prepared with a digital camera or the conventional two-dimensional images drawn by hand can be employed.

The unique feature of the present invention lies in that the Internet shoppers can view a specific article in an electronic catalogue from a variety of view points either by placing the mouse pointer and dragging it on the object or by clicking a direction control icon 1.

The image processing technique in accordance with the present invention is referred to as "quasi three-dimensional image processing" scheme in the specification and appended claims.

The quasi three-dimensional image processing system in accordance with the present invention further comprises a sound processing module 10 that presents sound and/or voice through a sound generating means 11 such as a speaker or headphone.

The quasi three-dimensional image processing system in accordance with the present invention further comprises a text processing module 12 that presents text information through a text generating means 13.

The image processing system in accordance with the present invention comprises a program module 5 including a main program module 2, data processing program module 3, input processing program module 6, image processing program module 8, sound processing program module 18, and text processing program module 12.

The image processing system in accordance with the present invention further comprises a database 4 and I/O devices 7, 9, 11, and 13.

### BRIEF DESCRIPTION OF THE DRAWINGS

Further features of the present invention will become apparent from a description of the information providing system, taken in conjunction with the accompanying drawings of the preferred embodiment of the invention, which, however, should not be taken to be limitative to the invention, but are for explanation and understanding only.

In the drawings:
FIG.1 is a schematic view illustrating an embodiment of the basic image of the quasi three-dimensional image in accordance with the present invention.
FIG.2 is a schematic view illustrating an embodiment of the quasi three-dimensional image taken from the left-handed direction, rotated clockwise from the front viewpoint, in accordance with the present invention.
FIG.3 is a schematic view illustrating an embodiment of the quasi three-dimensional image taken from the right-handed, rotated counterclockwise from the front viewpoint, in accordance with the present invention.

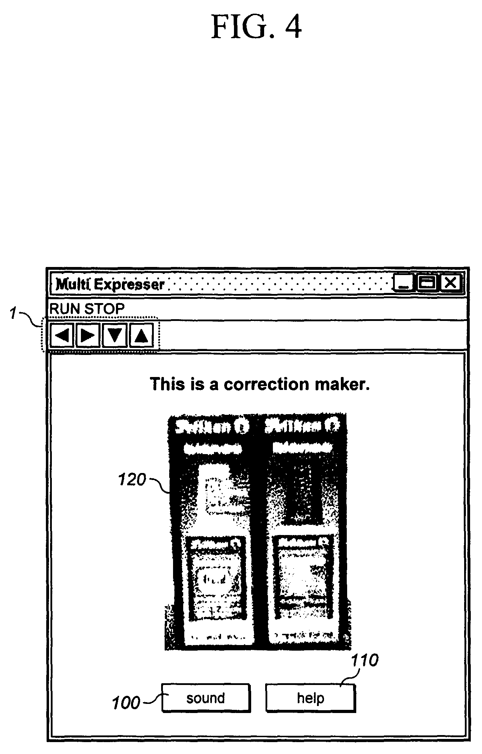

FIG.4 is a schematic view illustrating an initial viewpoint of a preferred embodiment exhibiting a direction control icon for manipulating the view angle of the object, provided by the computer program implemented in accordance with the present invention.

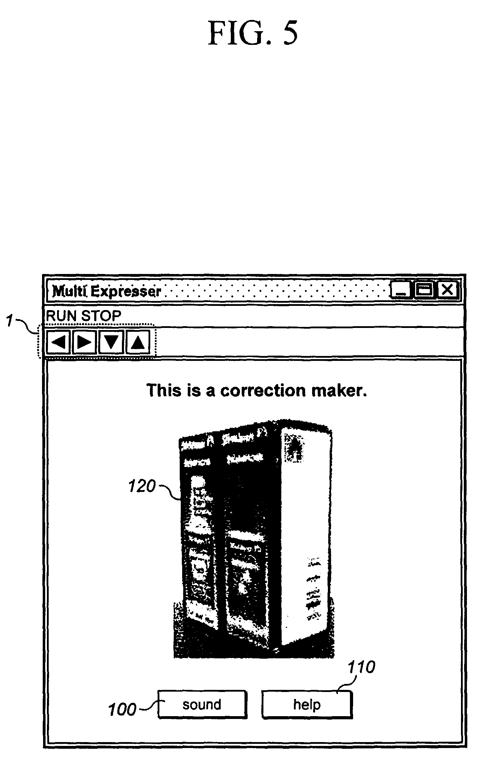

FIG.5 is a schematic view illustrating a left-handed viewpoint of a preferred embodiment exhibiting a direction control icon for manipulating the view angle of the image, provided by the computer program implemented in accordance with the present invention.

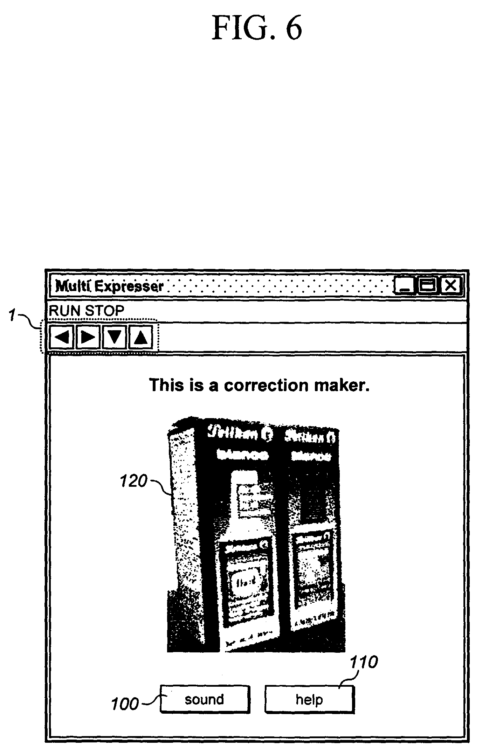

FIG.6 is a schematic view illustrating a right-handed viewpoint of a preferred embodiment exhibiting a direction control icon for manipulating the view angle of the image, provided by the computer program implemented in accordance with the present invention.
FIG.7 is a schematic diagram illustrating a workflow of the computer program packaged with a data file implemented in accordance with the present invention.
FIG.8 is a schematic diagram illustrating a workflow of the computer program without a data file implemented in accordance with the present invention.
FIG.9 is a schematic diagram illustrating a workflow of the computer program wherein a data file is included in a main program, implemented in accordance with the present invention.

### BEST MODE FOR CARRYING OUT THE INVENTION

The present invention will be explained in detail with reference to the accompanying drawings.

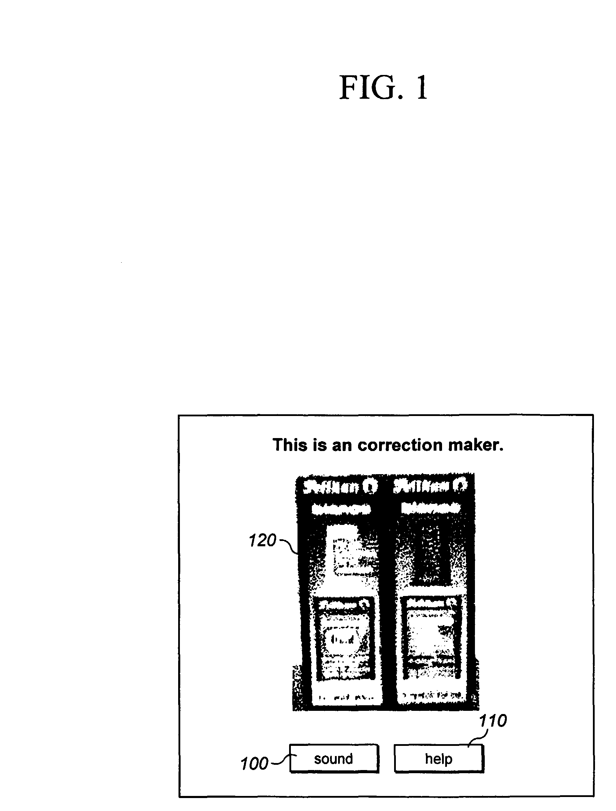

FIG.1 is a schematic view illustrating an embodiment of the basic image of the quasi three-dimensional image in accordance with the present invention. Referring to FIG.1, the Internet shopper or the shopper browsing the electronic catalogue can place the mouse pointer on the object displayed on the computer screen and thereafter drag the icon in the left direction.

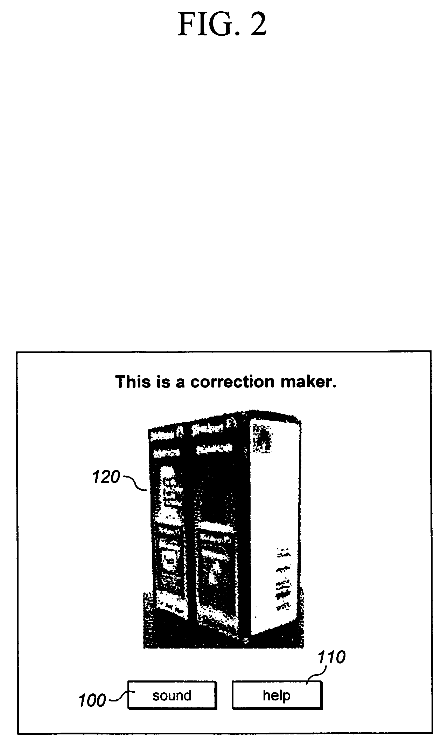

Then the image of an article in the electronic catalogue, for example, changes into the image depicted in FIG.2. Additional dragging of the mouse pointer to the right direction brings up the original image depicted in FIG.1.

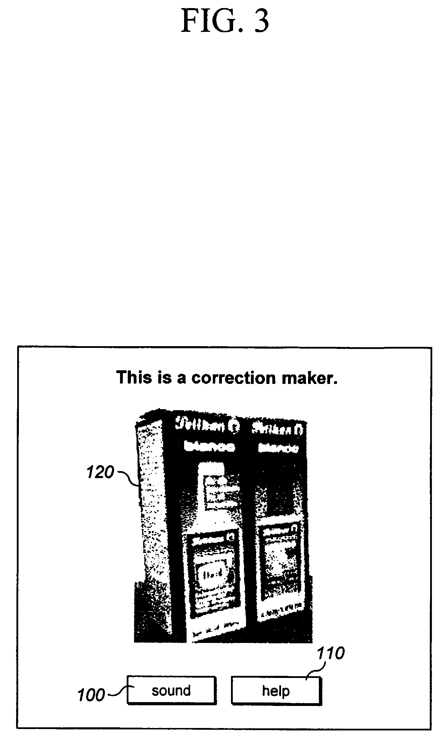

In the meanwhile, if the user drags the mouse pointer to the right direction after placing the mouse pointer on the object, he comes up with the image rotated in a clockwise manner as depicted in FIG.3.

In the examples depicted in FIGS. 1, 2, and 3, quasi three-dimensional images are presented from a set of two-dimensional images, which are prepared from the front viewpoint, the left 45° viewpoint, and the right 45° viewpoint. One can prepare still larger number of two-dimensional images taken from more dense cuts of view angles.

As a consequence, it is possible for the viewer, i.e. Internet shopper, to take a look at the article on the shelf from any direction as if the article is rotated in a continuous fashion.

In addition, as a preferred embodiment of the present invention, the interior look of the product, for instance, such as in the refrigerator, can be presented in a sequential order.

As another preferred embodiment of the present invention, the enlarged image of an article can also be provided in order to make the viewer to understand a certain part of the object more in detail.

The feature of the present invention further comprises the multimedia means for providing sound and text data in addition to the aforementioned quasi three-dimensional image processing scheme from the two-dimensional image data.

The features of the multimedia processing comprising sound and text data to a customer can be explained as the followings. Referring to FIGS.1 to 3, a sound button 100 depicted at the bottom of the screen can be clicked by a mouse pointer.

Then an Internet shopper or a customer browsing the electronic catalogue is provided with verbal explanation or the sound from a sound generating means such as a speaker or a headphone.

In this case, as a preferred embodiment of the present invention, a wide variety of other sounds generating means can be employed instead of the aforementioned sound generating means.

More preferably, text or some other types of data can also be presented on the display unit such as a computer monitor. As a preferred embodiment in accordance with the present invention, the 〈help〉 button shown in FIG.1 can be used for invoking the generation of other multimedia as well as text data.

Input device accepting the viewer's request for generating multimedia means such as text is not limited to the aforementioned 〈help〉 button in accordance with the present invention.

The quasi three-dimensional image processing method in accordance with the present invention can be implemented into a computer program through a couple of preferred embodiments.

As a first embodiment for the implementation into a computer program, two-dimensional image data and a main program module 5 controlling the two-dimensional image, sound, and text data 14 can be built into a single unit.

According to a first embodiment of the present invention, the information data corresponding to a specific article on the shelf can be fetched from an individual computer program 5 including a data file, which is stored in a recording media, for instance.

In this case, the individual computer program including the data file for a specific article can be downloaded on Internet.

As a second embodiment for the implementation into a computer program, a main program module 2 and a data file comprising an image, sound, and text are separately stored in a database 4.

The program module 5 can be accessed from the storage unit. The program module 5 can be downloaded to the user's computer on Internet. Thereafter, a data file comprising the image, sound, and text for a specific article is fetched either from the database 4 or from the storage unit such as a CDROM.

Preferably, the data file can be downloaded to the user's computer on Internet. The user can select either the first embodiment or the second embodiments with a careful consideration of the computing environment, feasibility, and other conditions.

In the meanwhile, a couple of embodiments can be employed for the operation of the image-processing program. As a first embodiment of the operating method of the image-processing program in accordance with the present invention, the execution file having an execution of EXE is prepared and distributed to a user either on Internet or through the storage means such as CDROM.

The execution file then is installed on the shopper's computer and executed independently under a general computer operating system.

As a second embodiment for the operation of the image-processing program in accordance with the present invention, an executing scheme as a component like Active-X can be employed. In this case, the component means a comprising element.

In other words, the computer program can be operated in an organic manner together with contents of the web page as like a component of the program producing the web page.

The computer program in accordance with a second embodiment of the present invention can be independently operated even inside the other different program.

As a first embodiment for the control of images of the image-processing program, one can simply click the direction control icon 1 up, down, left, and right in order to take a variety of viewpoints of the object in a quasi three-dimensional manner. Preferably, one can also use the arrow buttons of the keyboard, or manipulate the input device.

As a second embodiment for the control of images of the image-processing program, one can place the mouse pointer on the object and drag it to the direction as he wants.

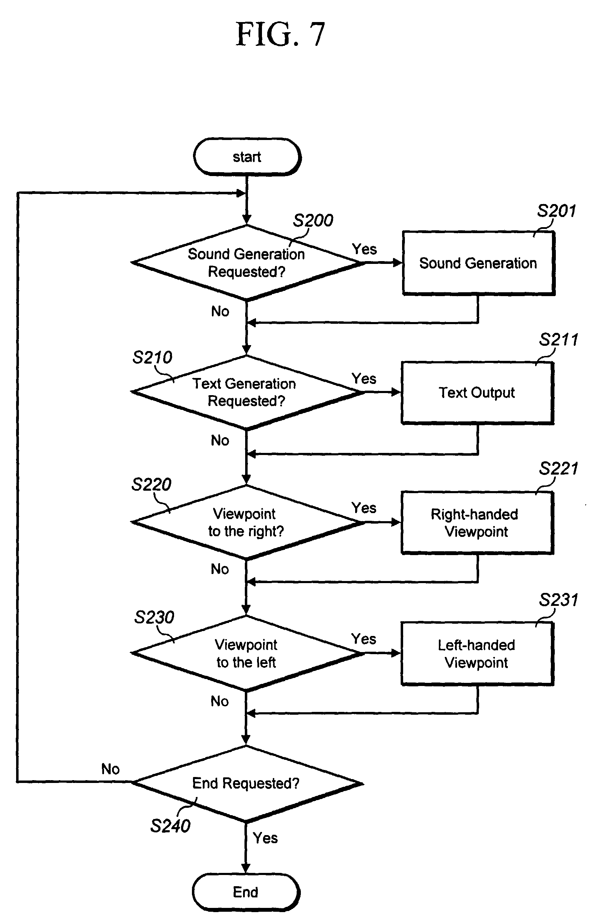

FIG.7 is a schematic diagram illustrating a workflow of the computer program implemented in accordance with the present invention.

Referring to FIG.7, sound data can be provided (step S201) when the generation of the sound data is requested from the viewer (step S200). Thereafter, text is generated (step S211) when the generation of text data is ordered (step S210).

Furthermore, according to the variety of inputs such as the clockwise rotation (step S220), counterclockwise rotation (step S230), or the embarking (step S240), the text output (step S211), the right-sided view (step S221), and the left-sided view (step S231) can be provided.

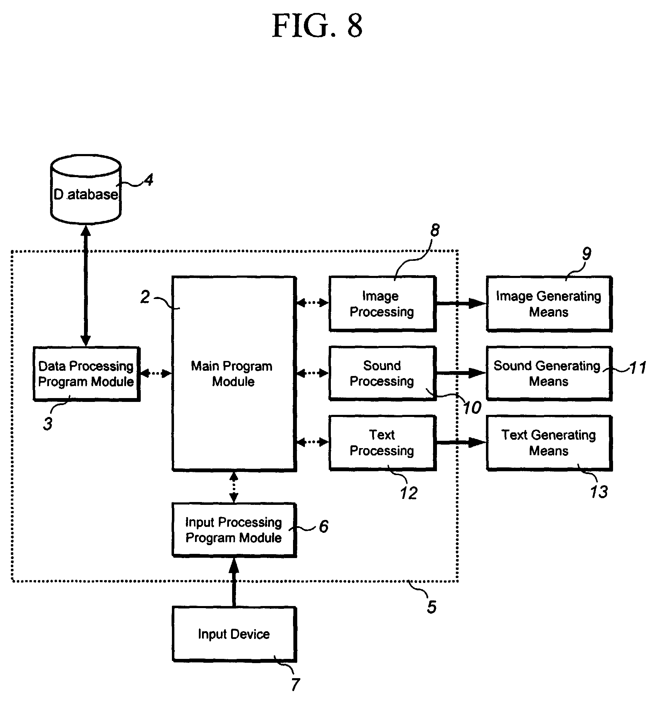

FIG.8 is a schematic diagram illustrating a workflow of the computer program without a data file implemented in accordance with the present invention. Referring to FIG.8, a sound generating means 11 such as a speaker and a headphone can be operated through a sound processing program module 10.

In addition, a text generating means 13 provides a text data through the text processing program module 12. More preferably, the text data can be presented automatically when the program is executed.

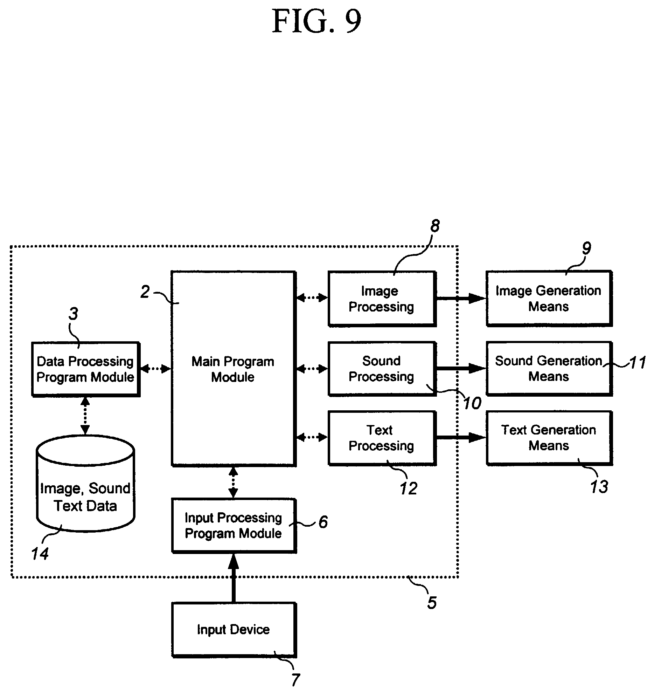

FIG.9 is a schematic diagram illustrating a workflow of a computer program wherein a data file is included in a program module, implemented in accordance with the present invention. Referring to FIG.9, the two-dimensional image data, sound, and the text data are built-in the execution program in a single unit.

Although the invention has been illustrated and described with respect to exemplary embodiments thereof, it should be understood by those skilled in the art that various other changes, omissions and additions may be made therein and thereto, without departing from the spirit and scope of the present invention.

Therefore, the present invention should not be understood as limited to the specific embodiment set forth above but to include all possible embodiments which can be embodies within a scope encompassed and equivalents thereof with respect to the feature set forth in the appended claims.

## Claims

1. A processing system presenting an image, sound, and/or text about an article on a computer, comprising:
a main program module operating as a subsidiary program, being composed as a component;
an image processing program module that controls a set of two-dimensional image data corresponding to multiple viewpoints of the object corresponding to said article, and enables the viewer to take a look at said article on the computer from a variety of three-dimensional view angles as the viewer places the mouse pointer on the object and drags the mouse pointer to the direction of which the shape the viewer intends to see;
a sound processing program module presenting a sound data to the viewer through a sound generating means;
a text processing program module presenting a text data to the viewer through a text generating means; and
a data processing program module, which is installed on said computer, controlling the presentation of said image, sound, and/or text regarding said article upon the request of the viewer wherein said image, sound, and/or text is downloaded on internet or accessed from a storage means.

2. A processing system presenting an image, sound, and text about an article on a computer, comprising:
a main program module operating as a subsidiary program, being composed as a component;
an image processing program module that controls a set of two-dimensional image data corresponding to multiple viewpoints of the object, and enables the viewer to take a look at said article on the computer from a variety of three-dimensional view angles as the viewer places the mouse pointer on the direction control icon that rotates the image of said article in a upward, downward, clockwise, or counterclockwise manner;
a sound processing program module presenting a sound data to the viewer through a sound generating means;
a text processing program module presenting a text data to the viewer through a text generating means; and
a data processing program module, which is installed on said computer, controlling the presentation of said image, sound, and/or text regarding said article upon the request of the viewer wherein said image, sound, and/or text is downloaded on internet or accessed from a storage means.

3. A processing system presenting an image, sound, and text about an article on a computer, comprising:
a main program module operating as a subsidiary program, being composed as a component;
an image processing program module that controls a set of two-dimensional image data corresponding to multiple viewpoints of the object, and enables the viewer to take a look at said article on the computer from a variety of three-dimensional view angles as the viewer places the mouse pointer on the object and drags the mouse pointer to the direction of which the shape the viewer intends to see;
a sound processing program module presenting a sound data to the viewer through a sound generating means;
a text processing program module presenting a text data to the viewer through a text generating means; and
a data processing program module, which includes image, sound, and/or text data regarding a specific article, being Internet downloaded on the computer upon the request of the viewer.

4. A processing system presenting an image, sound, and text about an article on a computer comprising:
a main program module operating as an independent program, being programmed as an execution file;
an image processing program module that controls a set of two-dimensional image data corresponding to multiple viewpoints of the object, and enables the viewer to take a look at said article on the computer from a variety of three-dimensional view angles as the viewer places the mouse pointer on the object and drags the mouse pointer to the direction of which the shape the viewer intends to see;
a sound processing program module presenting a sound data to the viewer through a sound generating means;
a text processing program module presenting a text data to the viewer through a text generating means; and
a data processing program module, which is installed on said computer, controlling the presentation of said image, sound, and/or text regarding said article upon the request of the viewer wherein said image, sound, and/or text is downloaded on internet or accessed from a storage means.

5. A processing system presenting an image, sound, and text about an article on a computer comprising:
a main program module operating as an independent program, being programmed as an execution file;
an image processing program module that controls a set of two-dimensional image data corresponding to multiple viewpoints of the viewer, and enables the viewer to take a look at said article on the computer from a variety of three-dimensional view angles as the viewer places the mouse pointer on the object and drags the mouse pointer to the direction of which the shape the viewer intends to see;
a sound processing program module presenting a sound data to the viewer through a sound generating means;
a text processing program module presenting a text data to the viewer through a text generating means;
a data processing program module fetching an individual data file corresponding to a specific article whenever the information of said specific article is requested, while said data file is produced separately from the main program module controlling said image, sound, and/or text data and said main program module is installed on the computer from the storage means.

6. A method for presenting an information about an article on a computer of a user with image, sound, and/or text, comprising the steps of:
installing a program module, which includes a set of two-dimensional images of said article, sound data, and/or text data, on said computer either by accessing a storage means or by download from a server on internet;
displaying said image of said article on the computer by operating said program module in such a way that a two-dimensional image corresponding to a specific view point is presented from a data file quasi-three-dimensionally under the control of the directional movement of the mouse pointer placed on the object by the viewer;
presenting a sound data including an article explanation and/or other sound effect to the viewer upon the request of the viewer by a sound generating means; and
presenting a text data including an article explanation to the viewer upon the request of the viewer on the computer.

7. A method for presenting an information about an article on a computer of a user with image, sound, and/or text, comprising the steps of:
installing a program module on the computer either by accessing a storage means or by download from a server on Internet;
fetching a data file corresponding to a specific article, including a set of two-dimensional images, sound, and/or text, either from a database or from storage means;
displaying said image of said article on the computer by operating said program module in such a way that a two-dimensional image corresponding to a specific viewpoint is presented from a data file quasi three-dimensionally under the control of the directional movement of the mouse pointer placed on the object by the viewer;
presenting a sound data including an article explanation and/or other sound effect to the viewer upon the request of the viewer by a sound generating means; and
presenting a text data including an article explanation to the viewer upon the request of the viewer on the computer.

8. A method for presenting an information about an article on a computer of a user with image, sound, and/or text, comprising the steps of:
installing a program module, which includes a set of two-dimensional images of said article, sound, and/or text data, on said computer either by accessing a storage means or by download from a server on internet;
displaying said image of said article on the computer by operating said program module in such a way that a two-dimensional image corresponding to a specific viewpoint is presented from a data file quasi three-dimensionally under the control either of mouse click on one among the upward, downward, clockwise, counterclockwise direction control icons or by the keyboard;
presenting a sound data including an article explanation and other sound effect to the viewer upon the request of the viewer by a sound generating means; and
presenting a text data including an article explanation to the viewer upon the request of the viewer on the computer.

9. A method for presenting an information about an article on a computer of a user with image, sound, and/or text, comprising the steps of:
installing a program module on the computer either by accessing a storage means or by download from a server on Internet;
fetching a data file corresponding to a specific article, including a set of two-dimensional images, sound, and/or text, either from a database or from storage means;
displaying said image of said article on the computer by operating said program module in such a way that a two-dimensional image corresponding to a specific viewpoint is presented from a data file quasi three-dimensionally under the control either of mouse click on one among the upward, downward, clockwise, counterclockwise direction control icons or of the keyboard;
presenting a sound data including an article explanation and other sound effect to the viewer upon the request of the viewer by a sound generating means; and
presenting a text data including an article explanation to the viewer upon the request of the viewer on the computer.

10. The method as claimed in Claims 6, 7, 8, or 9, wherein said displaying step further comprises a step of displaying the interior look of said article from the prepared two-dimensional image data in a time sequential manner.

11. The method as claimed in Claims 6, 7, 8, or 9, wherein said displaying step further comprises a step of displaying the enlarged look of a certain part of said article from the prepared two-dimensional image data.
